Europäisches Patentamt

European Patent Office

Office européen des brevets

(19)

(11) Numéro de publication: **0 201 414**
**B1**

(12) **FASCICULE DE BREVET EUROPEEN**

(45) Date de publication du fascicule du brevet:
**24.08.88**

(51) Int. Cl.⁴: **B 62 D 43/04**

(21) Numéro de dépôt: **86400942.8**

(22) Date de dépôt: **29.04.86**

(54) **Dispositif de rangement d'une roue de secours plate ou normale sous un plancher de véhicule automobile.**

(30) Priorité: **06.05.85  FR 8506860**

(43) Date de publication de la demande:
**12.11.86 Bulletin 86/46**

(45) Mention de la délivrance du brevet:
**24.08.88 Bulletin 88/34**

(84) Etats contractants désignés:
**DE GB IT**

(56) Documents cités:
**FR - A - 2 494 206**

**JAPAN ABSTRACTS OF JAPAN, vol. 6, no. 58
(M-122)[936], 15 april 1982; & JP - A - 57 955 (TOYO
KOGYO K.K.) 06-01-1982**

(73) Titulaire: **AUTOMOBILES PEUGEOT, 75, avenue de la
Grande Armée, F-75116 Paris (FR)**
Titulaire: **AUTOMOBILES CITROEN, 62 Boulevard
Victor-Hugo, F-92200 Neuilly-sur-Seine (FR)**

(72) Inventeur: **Mermoz, André, 128 rue Salvador Allende,
F-92000 Nanterre (FR)**

(74) Mandataire: **Moncheny, Michel et al, c/o Cabinet
Lavoix 2 Place d'Estienne d'Orves, F-75441 Paris
Cedex 09 (FR)**

## Description

L'invention est relative à un dispositif de rangement d'une roue de secours plate ou d'une roue normale disposée sous un plancher de véhicule automobile, et comportant un support mobile inférieur, ci-après appelé «panier», qui est relié à la structure d'un côté par des moyens d'articulation, autour d'un axe horizontal, et de l'autre côté par un mécanisme d'accrochage (dispositif du type divulgué par FR-A-2 494 206).

Ce mécanisme étant accessible près d'un bord du véhicule, notamment près de son pare-chocs arrière, le panier est décroché puis abaissé par pivotement autour de l'axe d'articulation lorsqu'on désire y placer ou en retirer une roue de secours.

Dans sa position d'utilisation, le panier est accroché, et la roue qu'il supporte est calée par serrage entre le panier et le plancher grâce au mécanisme d'accrochage généralement muni d'une vis de réglage verticale. Mais la course de réglage de cette vis est habituellement insuffisante pour assurer le maintien vertical alternativement d'une roue normale du véhicule ou d'une roue de secours, beaucoup plus légère et mince, appelée ci-après «roue plate». Un simple allongement de la vis pour permettre un réglage vertical suffisant impliquerait une manoeuvre longue et fastidieuse lors d'un changement de roue, et entraînerait une variation de la position du panier selon qu'il contient une roue plate ou une roue normale.

En revanche, il est préférable, pour des raisons d'aérodynamisme concernant l'écoulement d'air sous le véhicule, que la hauteur du panier par rapport au plancher soit toujours sensiblement la même, quel que soit le type de roue disposée dans le panier. Cette hauteur étant adaptée pour loger une roue normale, lorsqu'une roue plate est placée dans le panier, elle n'est pas immobilisée verticalement et elle est soumis à des trépidations ou à des rebonds bruyants quand le véhicule roule sur un sol irrégulier.

L'invention a pour but de réaliser un dispositif de rangement d'une roue de secours sous un plancher de véhicule, permettant de loger en l'immobilisant aussi bien une roue plate qu'une roue normale du véhicule.

Selon l'invention, le dispositif comprend d'une part, à proximité de l'axe d'articulation du panier, au moins une première butée, pour l'appui horizontal d'une roue normale, située au-dessus de la base du panier à une hauteur légèrement supérieure à l'épaisseur d'une roue plate, et au moins une seconde butée pour l'appui sensiblement horizontal et pour l'appui supérieur d'une roue plate engagée entre la base et la (les) première(s) butée(s), d'autre part, du côté du méchanisme d'accrochage, une butée inférieure d'une roue plate en appui contre la (les) seconde(s) butée(s), soit au-dessous de la jante et/ou du voile d'une roue normale contre la (les) première(s) butée(s).

Dans ces conditions, la roue plate est empêchée de rebondir par la (les) seconde(s) butée(s) lorsque le véhicule roule sur des creux ou des bosses.

Suivant quelques particularités avantageuses de l'invention:

la base du panier comportant deux brins de fil d'acier repliés vers le haut au droit de l'axe d'articulation en formant deux montants latéraux, ceux-ci sont prolongés chacun par une portion pliée du fil d'acier conformée de manière à constituer l'une de deux premières butées:

ladite portion pliée comporte au-dessus de la base, à une hauteur légèrement inférieure à l'épaisseur d'une roue plate, un tronçon légèrement incliné par rapport à la base et constituant l'une de deux susdites secondes butées;

une butée supérieure pour la roue plate est fixée sous le plancher sensiblement en vis-à-vis de la butée inférieure. Cette butée supérieure complète l'appui assuré par la (les) seconde(s) butée(s) précitée(s), de sorte que la roue plate ne peut en aucun cas rebondir, même en cas de secousse violente.

Un exemple non limitatif de réalisation d'un dispositif de rangement de roue de secours sous un plancher de véhicule selon l'invention est décrit ci-après, avec référence aux dessins annexés sur lesquels:

la figure 1 est une vue en élévation et en coupe suivant la ligne I-I de la figure 2 du dispositif de rangement selon l'invention contenant une roue normale;

la figure 2 est une vue de dessus, sans le plancher, du dispositif de la figure 1;

la figure 3 est une vue en élévation et en coupe partielle suivant la ligne III-III de la figure 4 du dispositif contenant une roue plate;

et la figure 4 en est une vue de dessus sans le plancher du dispositif de la figure 3.

On voit aux dessins un panier 1 situé sous un plancher 2 de véhicule articulé d'un côté sur un axe horizontal 3 et accroché de l'autre à un mécanisme classique 4 suspendu au plancher. L'axe d'articulation est constitué de deux petits axes alignés 3a, 3b fixés chacun à un élément 5a, 5b de la structure du véhicule.

Le panier 1 comporte une base réalisée de façon connue en fil d'acier, dont deux brins 6 s'étendent d'un étrier d'accrochage 7 jusqu'au droit de l'axe d'articulation 3, où ils sont repliés vers le haut en formant deux montants 8. La base du panier 1 comporte aussi un flasque 9 en tôle reposant sur les brins 6 et fixé à un brin transversal 10 solidaire des brins 6.

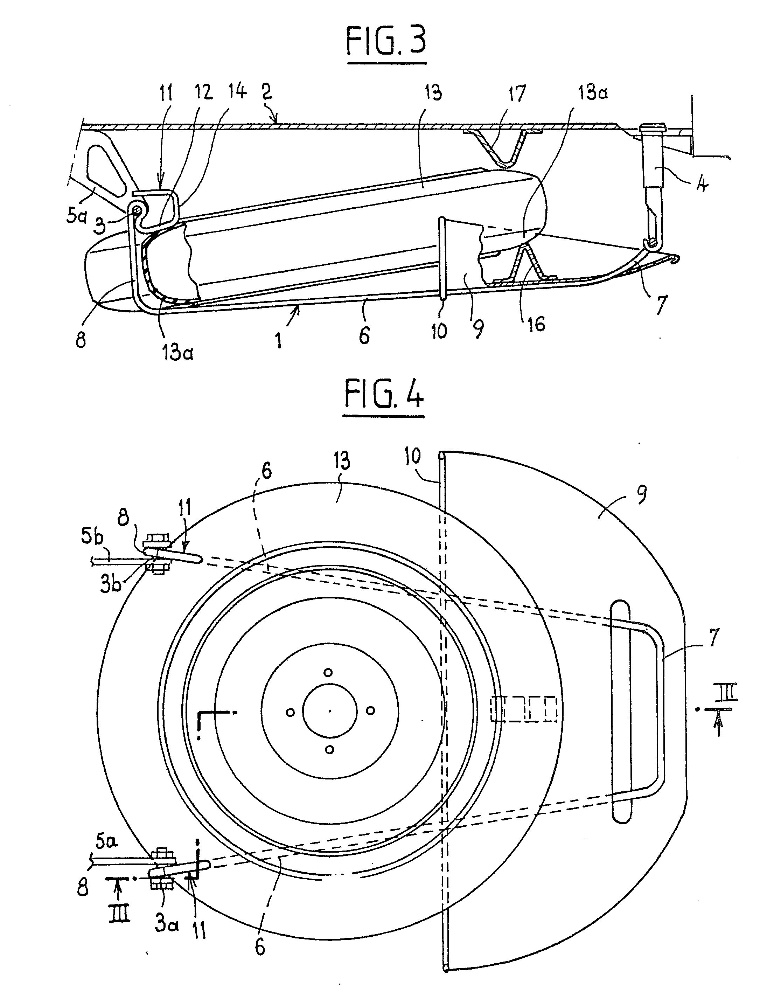

L'extrémité supérieure de chaque montant 8 est enroulée autour de l'un des axes 3a, 3b et prolongée par une portion pliée 11 du fil d'acier. Cette portion 11 comprend un tronçon 12 légèrement incliné par rapport à la base et situé au-dessus de celle-ci à une hauteur légèrement inférieure à l'épaisseur d'une roue de secours plate 13 (figure 3), du véhicule, et un tronçon 14 vertical situé à une hauteur un peu supérieure à ladite épaisseur.

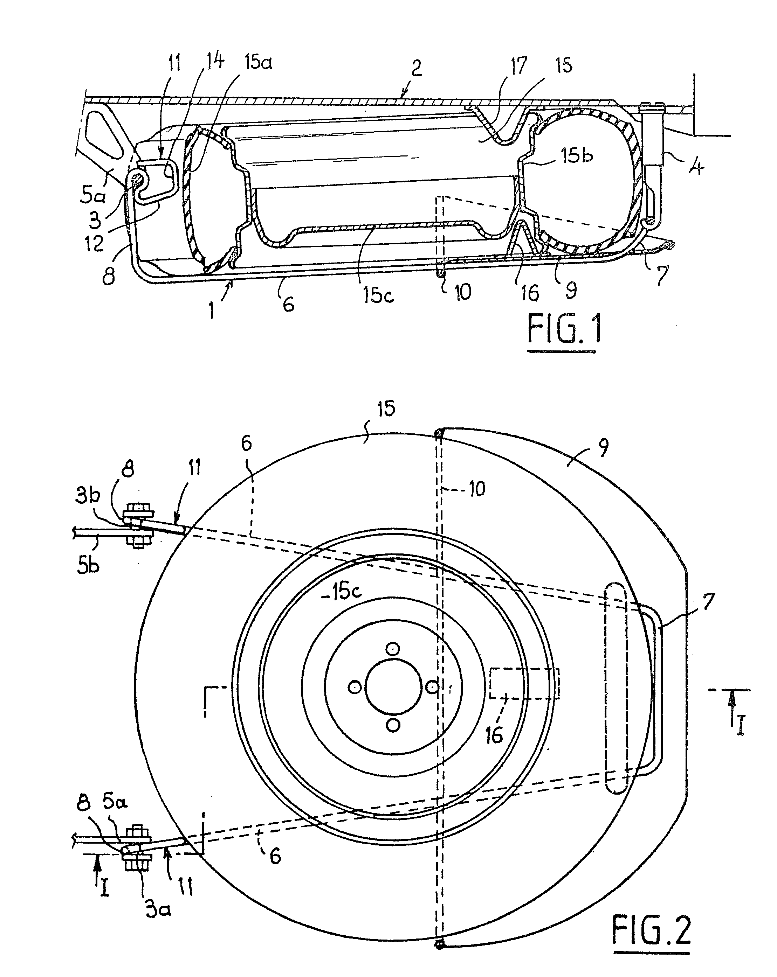

Chaque tronçon 14 constitue une première butée pour l'appui horizontal d'une roue normale 15 beaucoup plus épaisse que la roue plate 13 (figure 1), et chaque tronçon 12 constitue une seconde butée pour l'appui horizontal de la roue plate 13 engagée entre la base du panier 1 et la portion 11, chaque appui s'effectuant sur le pneumatique 15a, 13a de la roue concernée (figures 1 et 3).

Grâce à son engagement sous la butée 11, 14, la roue plate 13 prend place dans le panier 1 dans une position plus éloignée du méchanisme d'accrochage 4 que la roue normale 15. Du côté de ce méchanisme 4, est fixée sur la flasque 9 une butée inférieure 16 disposée de manière à être alternativement sous le pneumatique 13a d'une roue plate 13 en appui sur ses butées 12 (figure 3), ou en dessous de la jante 15b et/ou du voile 15c d'une roue normale 15 en appui sur ses butées 14 (figure 1).

Une butée supérieure 17 est agencée sous le plancher 2 sensiblement en vis-à-vis de la butée inférieure 16 de manière que le pneumatique de la roue 13 soit enserré entre les deux butées 16, 17 quand le panier 1 est accroché. Celui-ci est alors à une distance du plancher 2 sensiblement égale à l'épaisseur de la roue normale 15. Ainsi, lors d'un changement de roue dans le panier 1, il n'est pas nécessaire de modifier sensiblement la longueur du méchanisme d'accrochage 4 et la base du panier accroché est toujours sensiblement à la même hauteur par rapport au plancher, ce qui assure une constance des caractéristiques aérodynamiques relatives à l'écoulement d'air sous le véhicule.

En variante, une seule butée centrale peut être prévue pour assurer l'appui horizontal de l'une des roues à proximité de l'axe 3. La roue plate 13 peut aussi prendre appui directement sur les deux montants 8 et sur une butée supérieure voisine de l'axe 3. La butée supérieure 17 peut être supprimée, à condition que la butée inférieure 16 soit assez haute pour que la roue plate atteigne la face inférieure du plancher. La hauteur importante de la butée 16 implique alors de placer la roue normale 15 dans le panier en disposant son voile 15c vers le haut, c'est-à-dire en retournant la roue par rapport à sa position illustrée à la figure 1.

## Revendications

1. Dispositif de rangement d'une roue de secours plate ou d'une roue normale sous un plancher (2) de véhicule automobile, comportant un panier (1) de support mobile, relié à la structure du véhicule d'un côté par des moyens (8) d'articulation autour d'un axe horizontal (3), et de l'autre côté par un méchanisme d'accrochage (4), caractérisé en ce qu'il comprend d'une part, à proximité de l'axe d'articulation (3) du panier (1), au moins une première butée (14), pour l'appui horizontal d'une roue normale (15), située au-dessus de la base (6) du panier (1) à une hauteur légèrement supérieure à l'épaisseur d'une roue plate (13), et au moins une seconde butée (12) pour l'appui sensiblement horizontal et pour l'appui supérieur d'une roue plate (13) engagée entre la base (6, 10, 9) et la (les) première(s) butée(s) (14), et d'autre part, du côté du méchanisme d'accrochage (4), une butée inférieure (16) située sur la base (6, 10, 9) du panier (1), soit sous le pneumatique (13a) d'une roue plate (13) en appui contre la (les) seconde(s) butée(s) 12, soit au-dessous de la jante (15b) et/ou du voile (15c) d'une roue normale (15) en appui contre la (les) première(s) butée(s) (14).

2. Dispositif selon la revendication 1, caractérisé en ce que, la base du panier (1) comportant deux brins (6) de fil d'acier repliés vers le haut au droit de l'axe d'articulation (3) en formant deux montants latéraux (8), ceux-ci sont prolongés chacun par une portion pliée (11) du fil d'acier conformée de manière à constituer l'une de deux premières butées (14).

3. Dispositif selon la revendication 2, caractérisé en ce que ladite portion pliée (11) comporte au-dessus de la base, à une hauteur légèrement inférieure à l'épaisseur d'une roue plate (13), un tronçon (12) légèrement incliné par rapport à la base et constituant l'une de deux secondes butées.

4. Dispositif selon l'une des revendications 1 à 3, caractérisé en ce qu'une butée supérieure (17) pour la roue plate (13) est fixée sous le plancher (2) sensiblement en vis-à-vis de la butée inférieure (16).

## Patentansprüche

1. Vorrichtung zum Verstauen eines flachen Reserverads oder eines normalen Rads unter einem Kraftfahrzeug-Boden (2), umfassend einen Behälter (1) mit beweglichem Träger, der mit der Struktur des Fahrzeuges von einer Seite durch Mittel (8) zur gelenkigen Lagerung um eine horizontale Achse (3) und von der anderen Seite her durch einen Einhängemechanismus (4) verbunden ist, dadurch gekennzeichnet, dass sie einerseits in der Nähe der Gelenkachse (3) des Behälters (1) wenigstens einen ersten Anschlag (14) für die horizontale Auflage eines normalen Rads (15), der oberhalb der Basis (6) des Behälters (1) in einer Höhe etwas höher als die Dicke eines flachen Rads (13) liegt, und wenigstens einen zweiten Anschlag (12) für die im wesentlichen horizontale Auflage und für die höhere Auflage eines zwischen der Basis (6, 10, 9) und dem ersten Anschlag (den ersten Anschlägen) (14) in Eingriff befindlichen flachen Rads (13) und andererseits auf der Seite des Einhängemechanismus (4) einen unteren Anschlag (16) aufweist, der auf der Basis (6, 10, 9) des Behälters (1) entweder unter der Decke (13a) eines flachen Rads (13) in Auflage gegen den (die) zweiten Anschlag (Anschläge) (12) oder unterhalb der Felge (15b) und/oder des Körpers (15c) eines normalen Rads (15) in Auflage gegen den (die) ersten Anschlag (Anschläge) (14) liegt.

2. Vorrichtung nach Anspruch 1, dadurch gekennzeichnet, dass, wobei die Basis des Behälters (1) zwei Trume (6) aus Stahldraht aufweist, die rechts von der Gelenkachse (3) unter Bildung von zwei seitlichen Vertikalstützen (8) nach oben umgebogen sind, diese jeweils mittels eines gebogenen Abschnittes (11) des Strahldrahtes verlängert sind, der so gestaltet ist, dass er einen von zwei ersten Anschlägen (14) bildet.

3. Vorrichtung nach Anspruch 2, dadurch gekennzeichnet, dass der gebogene Abschnitt (11) oberhalb der Basis in einer Höhe etwas tiefer als die Dicke eines flachen Rads (13) einen etwa in bezug auf die Basis geneigten und einen von zwei zweiten Anschlägen bildenden Teilabschnitt (12) umfasst.

4. Vorrichtung nach einem der Ansprüche 1 bis 3, dadurch gekennzeichnet, dass ein oberer Anschlag (17) für das flache Rad (13) unter dem Boden (2) im wesentlichen gegenüber dem unteren Anschlag (16) befestigt ist.

## Claims

1. Device for stowing a flat emergency wheel or a normal wheel between a motor vehicle floor (2) having a mobile support basket (1) connected to the vehicule structure on one side by means (8) for articulating about a hinge pin (3) and on the other side by an attachment mechanism (4), characterized in that it comprises on the one hand, in the vicinity of the basket hinge pin (3), at least one first abutment (14) for the horizontal support of a normal wheel (15), positioned above the base (6) of the basket (1) at a height slightly exceeding the thickness of a flat wheel (13), and at least one second abutment (12) for the substantially horizontal support and for the upper support of a flat wheel (13) engaged between the base (6, 10, 9) and the first abutment(s) (14) and on the other hand on the side of the attachment mechanism (4) (4) a lower abutment (16) located on the base (6, 10, 9) of the basket (1), either beneath the tyre (13a) of a flat wheel (13) bearing against the second abutment(s) (12), or below the rim (15b) and/or web (15c) of a normal wheel (15) against the first abutment(s) (14).

2. Device according to claim 1, characterized in that the base of the basket (1) has two strands (6) of steel wire bent upwards to the right of the hinge pin (3) and forming two lateral members (8), each of the latter being extended by a bent portion (11) of the steel wire shaped as to constitute one of the two first abutments (14).

3. Device according to claim 2, characterized in that said bent portion (11) is provided above the base and at a height slightly less than the thickness of a flat wheel (13) with a section (12) which is slightly inclined with respect to the base and which constitutes one of the two second abutments.

4. Device according to one of the claims 1 to 3, characterized in that an upper abutment (17) for the flat wheel (13) is fixed beneath floor (2) substantially facing the lower abutment (16).

... 

FIG.1

FIG.2

## FIG. 3

## FIG. 4